# EUROPEAN PATENT SPECIFICATION

(11) **EP 2 993 527 B1**
(45) Date of publication and mention of the grant of the patent: **08.03.2017**
(21) Application number: 15180678.3
(22) Date of filing: 12.08.2015
(51) Int. Cl.: G03G 15/02, G03G 15/08, G03G 15/16

(54) **ELECTRO-CONDUCTIVE MEMBER, PROCESS CARTRIDGE, ELECTROPHOTOGRAPHIC APPARATUS, AND ADDITION-CURABLE SILICONE RUBBER MIXTURE**
ELEKTRISCH LEITENDES ELEMENT, PROZESSKARTUSCHE, ELEKTROFOTOGRAFISCHE VORRICHTUNG UND ADDITIONSHÄRTBARE SILIKONKAUTSCHUKMISCHUNG
ÉLÉMENT ÉLECTROCONDUCTEUR, CARTOUCHE DE TRAITEMENT, APPAREIL ÉLECTROPHOTOGRAPHIQUE ET MÉLANGE DE CAOUTCHOUC SILICONE DURCISSABLE PAR ADDITION

(30) Priority: 08.09.2014 JP 2014182759
(43) Date of publication of application: 09.03.2016
(73) Proprietor: Canon Kabushiki Kaisha, Tokyo 146-8501 (JP)
(72) Inventor: KAIHARA, Takanori, Tokyo 146-8501 (JP); UNO, Masashi, Tokyo 146-8501 (JP); YAMADA, Masaki, Tokyo 146-8501 (JP); ASHIBE, Tsunenori, Tokyo 146-8501 (JP)
(74) Representative: TBK

(56) References cited:
- WO-A1-2014/037983
- JP-A- 2008 074 913
- US-A1- 2014 072 350

## Description

### BACKGROUND OF THE INVENTION

### Field of the Invention

The present invention relates to an electro-conductive member used for electrophotographic apparatuses, such as copiers, laser printers, facsimiles, and printing machines, a process cartridge including the electro-conductive member, and an electrophotographic apparatus including the electro-conductive member. The present invention also relates to an addition-curable silicone rubber mixture.

### Description of the Related Art

In an image-forming process of an electrophotographic apparatus, a photoconductor drum serving as an electrostatic latent image-bearing member is uniformly charged with a charging member. An electrostatic latent image is formed on the photoconductor drum by the dissipation of charge due to exposure of a laser or the like. An appropriately charged developer in a developer container is uniformly applied to the developer roller using a developing roller and a regulating member configured to regulate the amount of the developer. The electrostatic latent image on the photoconductor drum is developed with a toner at the contact portion between the photoconductor drum and the developing roller. The toner on the photoconductor drum is transferred to a recording sheet with a transfer roller and fixed with a fixing device, thereby producing an electrophotographic image.

The toner left on the photoconductor drum is removed by a cleaning blade to complete the printing process.

In such an image-forming process, an electro-conductive member for electrophotography, which is used as a charging member or developing member, typically includes an electro-conductive elastic layer on an electro-conductive base and a resin layer outside the elastic layer.

The electro-conductive member is required to have the following characteristics: appropriate conductivity, excellent endurance, and so forth. As an elastic layer of such an electro-conductive member, a silicone rubber elastic layer in which deformation that is not easily recovered is less likely to occur even under long-term compression, namely, having excellent compression set properties, can be used. The silicone rubber elastic layer is produced by curing a silicone rubber mixture in which an electro-conductive filler, such as carbon black, is added to an addition-curable liquid silicone rubber. Japanese Patent Laid-Open Nos. 2003-55553 and 6-221321 each disclose a silicone rubber composition in which variations in electrical resistance are reduced by the addition of spherical silicone elastomer particles to an organopolysiloxane.

WO 2014037983 (A1) and US2014072350 (A1) relate to a developing roller including a shaft core, an elastic layer including an addition cure silicone rubber provided on the outer periphery of the shaft core, and a surface layer provided on the outer periphery of the elastic layer, wherein the elastic layer contains a compound represented by formula (1):

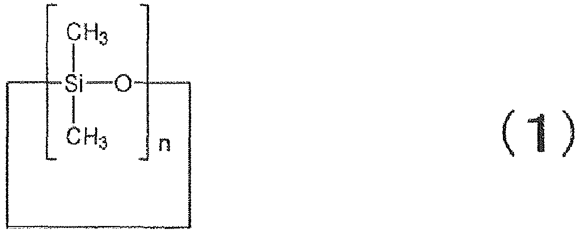

JP2008074913 (A) relates to an addition curing type liquid conductive silicone rubber composition for developing rollers comprising (A) 100 pts.mass of an organopolysiloxane containing at least two silicon atom-bound alkenyl groups in one molecule, (B) 0.1 to 30 pts.mass of an organo hydrogen polysiloxane containing at least two silicon atom-bound hydrogen atoms in one molecule, (C) 0.5 to 30 pts.mass of conductive powder, and (D) a catalytic amount of an addition reaction catalyst, and contains low molecular polysiloxanes having a degree of polymerization of 3 to 20 in an amount of ≤ 1 mass%.

However, studies by the inventors have revealed that a silicone rubber elastic layer to which conductivity is imparted with carbon black has a problem in which when a current continues to flow over prolonged periods of time, the electrical resistance is increased. Hereinafter, the problem is also referred to as an "increase in electrical resistance due to power application".

Aspects of the present invention are directed to providing an electro-conductive member for electrophotography, the electro-conductive member including a silicone rubber elastic layer with electrical resistance that is less likely to vary even when a current flows therethrough over prolonged periods of time, a process cartridge including the electro-conductive member, and an electrophotographic apparatus including the electro-conductive member.

Another aspect of the present invention is directed to providing an addition-curable silicone rubber mixture that is formed into a silicone rubber elastic layer with electrical resistance that is less likely to vary even when a current flows therethrough over prolonged periods of time.

### SUMMARY OF THE INVENTION

The present invention in its first aspect provides an electro-conductive member for electrophotography as specified in claims 1 and 2.

The present invention in its second aspect provides an addition-curable silicone rubber mixture as specified in claim 3.

The present invention in its third aspect provides a process cartridge detachably attachable to the main body of an electrophotographic apparatus as specified in claims 4 and 5.

The present invention in its fourth aspect provides an electrophotographic apparatus as specified in claims 6 and 7.

Further features of the present invention will become apparent from the following description of exemplary embodiments with reference to the attached drawings.

### BRIEF DESCRIPTION OF THE DRAWINGS

Fig. 1 is a schematic diagram of an example of an electro-conductive member according to an embodiment of the present invention.
Fig. 2 is a schematic diagram partially illustrating a method for measuring the carbon black content and the inorganic particle content of an electro-conductive member according to an embodiment of the present invention.
Fig. 3 is an explanatory drawing of a method for measuring the sphericity of an inorganic particle according to an embodiment of the present invention.
Figs. 4A and 4B are schematic explanatory drawings each illustrating a method for measuring the electrical resistance of an electro-conductive member according to an embodiment of the present invention.
Figs. 5A and 5B are schematic explanatory drawings each illustrating a method for measuring the electrical resistance of a belt-shaped electro-conductive member according to an embodiment of the present invention.
Fig. 6 is a schematic drawing illustrating an example of a process cartridge including an electro-conductive member according to an embodiment of the present invention.
Fig. 7 is a schematic drawing illustrating an example of an electrophotographic apparatus including an electro-conductive member according to an embodiment of the present invention, the electro-conductive member being used as a developing roller.

### DESCRIPTION OF THE EMBODIMENTS

The inventors have conducted studies and have found that a silicone rubber elastic layer to which conductivity is imparted with carbon black has a problem in which when a current continues to flow over prolonged periods of time, the electrical resistance is increased. Hereinafter, the problem is also referred to as an "increase in electrical resistance due to power application".

The inventors speculate that the increase in the electrical resistance of the silicone rubber elastic layer, to which the conductivity is imparted with carbon black, due to power application occurs in the following way.

The main chain of a silicone rubber molecule has a helical structure in which silicon atoms are positively charged, oxygen atoms are negatively charged, and six siloxane bonds form one turn of the structure. Here, alkyl groups, such as methyl groups, present as side chains of the silicone rubber molecule are arranged outside the helical structure. Such a molecular structure characteristic of silicone rubber results in low intermolecular forces between silicone rubber molecules and the following features: large gaps between the molecules and low density.

In order not to poison a catalyst, such as a Pt catalyst, used to cure an addition-curable silicone rubber material, carbon black having a small number of surface functional groups can be typically used. Thus, the silicone rubber and the carbon black have small numbers of surface functional groups and interact weakly with each other.

To function the carbon black as a conducting agent, the particles of the carbon black need to form primary aggregates (aggregates) and secondary aggregates (agglomerates) to form a conducting path. Typically, in the case where adjacent aggregates and agglomerates are not in contact with each other and are in close proximity to each other, they form a conducting path owing to the tunneling effect. This allows a current to flow at the time of the application of a voltage.

The application of a voltage to the carbon black-containing silicone rubber elastic layer polarizes the carbon black particles (aggregates or agglomerates) along an electric field. That is, a negative charge is induced in a portion of each of the carbon black particles on the upstream side (positive electrode side) of the electric field, and a positive charge is induced in a portion of each carbon black particle on the downstream side (negative electrode side) of the electric field. This generates the electrostatic force of attraction acting between the carbon black particles. That is, the electrostatic force of attraction along basically linear electric lines of force extending from the upstream side (positive electrode side) to the downstream side (negative electrode side) at the time of the application of a voltage acts on the carbon black particles. As described above, the weak interaction between the carbon black particles and the silicone rubber molecules allows the carbon black particles to pass slowly through the network of the crosslinked silicone rubber. As a result, the carbon black particles gather gradually. In other words, the conducting path is changed by the application of the voltage.

When the application of the voltage is stopped, the electrostatic force of attraction acting between the carbon black particles is dissipated. However, once the carbon black particles gather, cohesive forces act between the carbon black particles, so that the state of aggregation of the carbon black particles is fixed as it is.

This is a possible reason for the increase in electrical resistance due to power application when a direct current voltage is continuously applied to the silicone rubber elastic layer over prolonged periods of time.

For example, when the increase in electrical resistance due to power application occurs in a developing roller serving as an electro-conductive member, a development field formed between the developing roller and the photoconductor drum is not appropriately controlled, causing an adverse effect in an image, such as ghosting, in some cases.

In light of these considerations, the inventors have conducted studies of electrical and mechanical properties of silicone rubber mixtures produced by adding various fillers to carbon black-containing silicone rubbers. The inventors have focused their attention on the fact that when a specific spherical filler is added, a silicone rubber mixture capable of reducing both of the variations in electrical resistance and the increase in electrical resistance due to power application is provided, in some cases. In light of the experimental results, the inventors have conducted further studies of a silicone rubber mixture capable of reducing both of the variations in electrical resistance and the increase in electrical resistance due to power application.

The inventors have found that a silicone rubber mixture capable of reducing both of the variations in electrical resistance and the increase in electrical resistance due to power application is produced by the addition of a specific amount of a filler having specific physical properties. The findings have led to the completion of the present invention.

An electro-conductive member for electrophotography according to an embodiment of the present invention includes, in sequence, an electro-conductive base, an electro-conductive elastic layer, and a resin layer.

The elastic layer contains a cured product of an addition-curable silicone rubber mixture containing components (a) to (d),
the component (a): an organopolysiloxane that contains an alkenyl group attached to a silicon atom in its molecule,
the component (b): an organopolysiloxane that contains a hydrogen atom attached to a silicon atom in its molecule,
the component (c): carbon black, and
the component (d): spherical solid inorganic particles.

In the addition-curable silicone rubber mixture,
the content of the component (c) is 2.0% by mass or more and 60.0% by mass or less with respect to the total mass of the component (a) and the component (b),
the content of the component (d) is 0.4% by mass or more and 20.0% by mass or less with respect to the total mass of the component (a) and the component (b), and
the component (d) has a number-average particle diameter of 1 µm or more and 100 µm or less, a specific gravity of 1.5 or more, and a sphericity of 0.8 or more.

A silicone rubber mixture according to an embodiment of the present invention, the silicone rubber mixture providing a silicone rubber elastic layer in which an increase in electrical resistance due to power application is inhibited, contains:
component (a): an organopolysiloxane that contains an alkenyl group attached to a silicon atom in its molecule;
component (b): an organopolysiloxane that contains a hydrogen atom attached to a silicon atom in its molecule;
component (c): carbon black; and
component (d): spherical solid inorganic particles,
in which in the addition-curable silicone rubber mixture,
the content of the component (c) is 2.0% by mass or more and 60.0% by mass or less with respect to the total mass of the component (a) and the component (b),
the content of the component (d) is 0.4% by mass or more and 20.0% by mass or less with respect to the total mass of the component (a) and the component (b), and
the component (d) has a number-average particle diameter of 1 µm or more and 100 µm or less, a specific gravity of 1.5 or more, and a sphericity of 0.8 or more.

The inventors speculate that the reason the silicone rubber elastic layer which inhibits the increase in electrical resistance due to power application and which has only small variations in electrical resistance is produced from the foregoing silicone rubber mixture is described below.

A mechanism for the increase in electrical resistance due to power application has been described above. In the elastic layer containing a cured product of the silicone rubber mixture according to an embodiment of the present invention, the carbon black particles are polarized during power application. Thus, the electrostatic force of attraction acts between the carbon black particles so as to bring the carbon black particles closer together. However, the spherical solid inorganic particles dispersed in the elastic layer composed of the cured product of the addition-curable silicone rubber mixture having the foregoing composition inhibit the movement of the carbon black particles due to power application. This will inhibit the increase in electrical resistance due to power application.

Specifically, many polar groups, such as hydroxy groups, are present on surfaces of the spherical inorganic particles, unlike the carbon black. Thus, the spherical inorganic particles interact strongly with silicone molecules and are fixed in the silicone rubber mixture. When a voltage is applied to the silicone rubber mixture, the carbon black particles located on the upstream side (positive electrode side) of the electric field and the carbon black particles located on the downstream side (negative electrode side) are attracted to each other along the electric lines of force extending from the upstream side (positive electrode side) to the downstream side (negative electrode side). However, when the spherical inorganic particles are present between the carbon black particles, the spherical inorganic particles inhibit the movement of the carbon black particles.

It is speculated that the spherical inorganic particles serve to inhibit the movement of the carbon black particles as described above, thereby inhibiting the increase in electrical resistance due to power application.

A higher specific gravity of the inorganic particles will further enhance the effect of inhibiting the movement of the carbon black particles because the inorganic particles are not dragged by the movement of the carbon black particles. This is the reason for the presence of the lower limit of the specific gravity of the inorganic particles in an embodiment of the present invention, the lower limit being set to provide the effect.

Regarding the size of the inorganic particles that provide the effect, the inorganic particles having a particle diameter equal to or smaller than a certain diameter provide the effect. The reason for this is speculated as follows: When a voltage is applied to the cured product of the silicone rubber mixture, the carbon black moves along the linear electric lines of force extending from the upstream side (positive electrode side) to the downstream side (negative electrode side). In the case where the inorganic particles are added to the silicone rubber mixture, however, the electric lines of force are distorted in the vicinity of the inorganic particles because the inorganic particles have a dielectric constant different from that of the silicone rubber. Although similar distortion occurs in the vicinity of the carbon black particles, the carbon black particles have a particle diameter smaller than that of the inorganic particles and thus have only a small effect on the electric lines of force.

In the case where the electric lines of force are distorted, there are some regions where the directions of polarization of the carbon black are not parallel to the electric field. In a region, the electrostatic force of attraction acts between the carbon black particles. In another region, the electrostatic force of repulsion acts between the carbon black particles. As a result, the overall cured product of the silicone rubber mixture will promote the movement of the carbon black particles. Thus, excessively large inorganic particles causes the electric lines of force to be further distorted, so that the effect of inhibiting the increase in electrical resistance due to power application will be less likely to be provided.

The studies by the inventors further reveal that when the inorganic particles have a sphericity less than 0.8, the distortion of the electric lines of force is large. In this case, the effect of inhibiting the increase in electrical resistance due to power application will be less likely to be provided.

Furthermore, an excessive amount of the inorganic particles added with respect to the total amount of components (a) and (b), i.e., the total amount of the organopolysiloxane components, is less likely to provide the effect of inhibiting the increase in electrical resistance due to power application. The reason for this is presumably that even in the case of spherical inorganic particles, an excessive amount added results in the severe distortion of the electric lines of force. The movement of the carbon black particles is promoted by the same reason as that of the particle diameter described above. Thus, the effect of inhibiting the increase in electrical resistance due to power application is less likely to be provided.

In an embodiment of the present invention, the electro-conductive member for an electrophotographic apparatus indicates a charging member, a developing member, a toner regulating member, a fixing member, or a transfer member.

The silicone rubber mixture used for the elastic layer of the electro-conductive member will be described below. The silicone rubber mixture used here indicates a mixture containing an organopolysiloxane as a principal material. The mixture may contain various additives, such as a conducting agent, e.g., carbon black, a filler, e.g., quartz powder, diatomaceous earth, dry-process silica, or wet-process silica, a reaction inhibitor for adjusting a curing rate, a colorant, a plasticizer, and a flame retarder, as needed.

The addition-curable silicone rubber mixture used for the formation of the elastic layer according to an embodiment of the present invention essentially contains components (a) to (d) described below.

### Component (a)

Component (a) is an organopolysiloxane containing an alkenyl group attached to a silicon atom in its molecule. The molecular weight of the component (a) is not particularly limited. The component (a) preferably has a weight-average molecular weight (Mw) of 10,000 or more and 1,000,000 or less and particularly preferably 50,000 or more and 700,000 or less.

The alkenyl group of the organopolysiloxane serves as a portion that reacts with active hydrogen of organohydrogenpolysiloxane as component (b) described below to form a crosslinking site. The type thereof is not particularly limited. Because of, for example, high reactivity to active hydrogen, at least one of a vinyl group and an allyl group can be used. Of these, the vinyl group can be used.

### Component (b)

The component (b) is an organopolysiloxane containing a hydrogen atom attached to a silicon atom in its molecule (hereinafter, also referred to as an "organohydrogenpolysiloxane").

The component (b) functions as a crosslinking agent for an addition reaction in a crosslinking and curing step. The number of hydrogen atoms attached to silicon atoms is required to be two or more per molecule. To appropriately perform a curing reaction, three or more hydrogen atoms are preferred. The molecular weight of the organohydrogenpolysiloxane is not particularly limited. The organohydrogenpolysiloxane preferably has a weight-average molecular weight (Mw) of 1,000 or more and 10,000 or less.

To appropriately perform the curing reaction, the organohydrogenpolysiloxane more preferably has a weight-average molecular weight of 1,000 or more and 5,000 or less, which is a relatively low molecular weight.

### Component (c)

Component (c) is carbon black to impart conductivity and additional strength to the elastic layer of the electro-conductive member.

Examples of carbon black include acetylene black, furnace black, thermal black, and channel black.

To impart appropriate conductivity and mechanical strength to the electro-conductive member, the carbon black content is required to be 2.0% by mass or more and 60.0% by mass or less with respect to the total mass of the component (a) and the component (b).

To impart appropriate conductivity and additional strength to the electro-conductive member, carbon black can have an average primary particle diameter of 10 to 100 nm and a DBP absorption of 30 to 200 mL/100 g. To achieve required physical properties, two or more types of carbon black may be used in combination.

### Component (d)

Component (d) is inorganic particles having a specific gravity of 1.5 or more and a sphericity, which is defined below, of 0.8 or more, and a number-average particle diameter of 1 µm to 100 µm. Examples of the inorganic particles include particles of zeolite, silica, zirconia, alumina, magnesium oxide, titanium oxide, barium titanate, glass, zinc oxide, calcium oxide, tin oxide, copper oxide, iron oxide, lead oxide, manganese oxide, calcium carbonate, sodium carbonate, aluminum, copper, iron, titanium, zinc iodide, tin iodide, lead iodide, and copper iodide.

These materials may be used separately or in combination. Each of the inorganic particles may be subjected to surface treatment with a resin or metal, as needed. An example of the inorganic particles that can achieve a better effect according to an embodiment of the present invention is inorganic particles of at least one selected from the group consisting of zeolite, alumina, zirconia, and silica.

In the case of the inorganic particles having a number-average particle diameter of 1 µm or more and 100 µm or less, the inorganic particles can be uniformly present in the elastic layer to inhibit the movement of carbon black in the elastic layer, thereby inhibiting the increase in the electrical resistance of the electro-conductive member according to an embodiment of the present invention when power is applied.

The component (d) is required to be added in an amount of 0.4% by mass or more and 20.0% by mass or less with respect to the total mass of the components (a) and (b). An amount of 0.4% by mass or more and 20.0% by mass or less results in both of the variations in electrical resistance and the inhibition of the increase in electrical resistance due to power application. In particular, the component (d) is preferably added in an amount of 0.4% by mass or more and 18.0% by mass or less with respect to the total mass of the components (a) and (b).

The amount of the component (d) added (% by mass) can be 0.2 or more times to 10 or less times of the component (c).

When the component (d) has a sphericity less than 0.8, the shape of the component (d) departs from a spherical shape and approaches an indefinite shape. The effect of inhibiting the movement of the carbon black particles varies depending on the curvature and unevenness of a surface. It is thus difficult to effectively inhibit the increase in electrical resistance due to power application. At a sphericity of 0.8 or more, the spherical inorganic particles have a uniform shape, thereby providing the effect of inhibiting the movement of the carbon black.

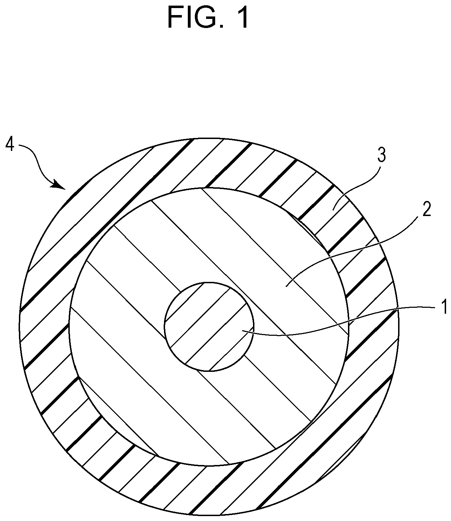

Fig. 1 is a schematic cross-sectional view of an electro-conductive member according to an embodiment of the present invention. In Fig. 1, an electro-conductive member 4 includes an elastic layer 2 on the outer periphery of a mandrel 1; and a resin layer 3 on the elastic layer 2.

To achieve desired performance, various additives, such as a plasticizer, a heat resistance-improving agent, a flame retardant, an antioxidant, a crosslinking promoter, a crosslinking retardant, a crosslinking assistant, and a thixotropic agent, may be appropriately added to the silicone rubber mixture to the extent that the effect according to an embodiment of the present invention is not impaired. Examples of the plasticizer include polydimethylsiloxane oil, diphenylsilanediol, trimethylsilanol, phthalic acid derivatives, and adipic acid derivatives.

The addition-curable silicone rubber mixture can contain a known platinum-based catalyst as a crosslinking catalyst. Examples of the platinum-based catalyst include platinum compounds, such as platinic chloride, complexes of platinic chloride with alcohol compounds, ether compounds, and hydrates. The amount of the crosslinking catalyst added can be in the range of 1 ppm or more and 2000 ppm or less with respect to the organopolysiloxane. Electro-conductive base

Any electro-conductive base having strength sufficient to support the elastic layer 2 and the resin layer 3 and to convey toner and having conductivity sufficient for an electrode may be used as the electro-conductive base 1 used in an embodiment of the present invention without particular limitation. Examples of a material for the electro-conductive base 1 include metals, such as aluminum, copper, stainless steel, and iron; alloys; and electro-conductive synthetic resins. These materials may be plated with chromium or nickel. A primer may be applied to the electro-conductive base in order to bond the electro-conductive base to the elastic layer formed outside the electro-conductive base. Examples of the primer include silane coupling-based primers. The size of the electro-conductive base is not particularly limited. For example, the electro-conductive base has an outside diameter of about 4 to about 20 mm and a length of about 200 to about 380 mm.

### Elastic layer

Examples of a method for forming the elastic layer 2 on the electro-conductive base 1 include a die molding method, an extrusion molding method, an injection molding method, and an application molding method. Another example thereof is a method in which the electro-conductive base is coated with a silicone rubber mixture having flowability in an uncured state using a ring-shaped coating head and then curing is performed. A surface of the elastic layer 2 may be modified by a surface modification method, for example, surface polishing, corona treatment, flame treatment, or excimer treatment, from the viewpoint of improving adhesion to the resin layer 3.

Various known additives may be used for the silicone rubber mixture used in an embodiment of the present invention. For example, a reaction inhibitor for adjusting a curing rate, a filler for imparting additional strength, a colorant, a plasticizer, a flame retarder, and so forth may be added as needed.

A catalyst for promoting a hydrosilylation reaction may be added to the silicone rubber mixture used in an embodiment of the present invention. Any known catalysts for promoting a hydrosilylation reaction may be used. Examples of such catalysts include platinum-based, palladium-based, and rhodium-based catalysts. In particular, platinum-based catalysts may be used. Examples of platinum-based catalysts that may be used include platinic chloride, alcohol solutions of platinic chloride, complexes of platinic chloride with olefin, complexes of platinic chloride with vinylsiloxane, and silica-supported platinum.

The elastic layer preferably has a thickness of 0.1 mm or more and 50 mm or less and more preferably 0.3 mm or more and 10 mm or less.

The elastic layer is required to have appropriate hardness as an electro-conductive member. The elastic layer can have an Asker C hardness of, for example, 10° or more and 80° or less. At an Asker C hardness of the elastic layer of 10° or more, the exudation of an oil component from a rubber material contained in the elastic layer is inhibited, thereby inhibiting contamination to other members. At an Asker C hardness of the elastic layer of 80° or less, the degradation of other members, for example, the degradation of the photoconductor drum, is inhibited, thereby inhibiting a reduction in the image quality of an output image. Here, the Asker C hardness is defined by a measurement value obtained by measuring a specimen separately prepared in conformity with the standard SRIS 0101 specified by the Society of Rubber Science and Technology with an Asker C-type hardness meter (manufactured by Kobunshi Keiki Co., Ltd).

### Resin layer

The resin layer of the electro-conductive member according to an embodiment of the present invention will be described below. Examples of a material for the resin layer include thermoplastic resins, such as styrene-based resins, vinyl-based resins, polyether sulfone resins, polycarbonate resins, polyphenylene oxide resins, polyamide resins, fluorocarbon resins, cellulose-based resins, and acrylic-based resins and thermosetting and photocurable resins, such as epoxy resins, polyester resins, alkyd resins, phenolic resins, melamine resins, benzoguanamine resins, polyurethane resins, urea resins, silicone resins, and polyimide resins. These materials may be used separately or in combination.

In the case where surface roughness is required to be controlled, fine particles for controlling roughness may be added to the resin layer. As the fine particles for controlling roughness, for example, fine particles composed of a polyurethane resin, a polyester resin, a polyether resin, a polyamide resin, an acrylic resin, and a polycarbonate resin may be used. They may be used separately or in combination. The fine particles for controlling roughness can have a volume-average particle diameter of 3 µm or more and 20 µm or less. The content of the fine particles for controlling roughness in the resin layer can be 1 part by mass or more and 50 parts by mass or less with respect to 100 parts by mass of the resin solid content in the resin layer.

Carbon black may be added to a resin layer dispersion serving as a raw material of the resin layer. Examples of carbon black include carbon blacks having high conductivity, such as EC300J and EC600JD (trade name, manufactured by Lion Corporation),; and carbon blacks having intermediate conductivity, such as carbon black for rubber and carbon black for coating. Of these, the carbon blacks for coating can be used from the viewpoint of achieving good control of dispersibility and conductivity. They may be used separately or in combination. The content of the carbon black in the resin layer can be 3% by mass or more and 30% by mass or less with respect to the resin component from the viewpoint of imparting uniform conductivity to the resin layer.

The resin layer may further contain, for example, a crosslinking agent, a plasticizer, a filler, a bulking agent, a vulcanizing agent, a vulcanizing aid, a crosslinking aid, an antioxidant, an age inhibitor, a processing aid, and a leveling agent in addition to the foregoing materials as long as the function is not impaired.

The resin layer can have a thickness of 1 µm or more and 100 µm or less. At a thickness of the resin layer of 1 µm or more, degradation due to abrasion is inhibited. At a thickness of the resin layer of 100 µm or less, the surface of the electro-conductive member does not have high hardness, so that the degradation of other members, for example, the degradation of the photoconductor drum, is inhibited, thereby inhibiting a reduction in the image quality of an output image.

A method for forming the resin layer is not particularly limited. For example, components for the resin layer are subjected to dispersion treatment under stirring in a solvent to form a coating dispersion, thereby preparing a resin layer coating dispersion. The resin layer coating dispersion is applied to the elastic layer and solidified by drying or cured, thereby forming the resin layer. The dispersion treatment under stirring can be performed with a known dispersing device using beads, for example, a sand mill, a paint shaker, DYNO-MILL, and a pearl mill. As a coating method, for example, dip coating, ring coating, spray coating, or roll coating may be used. Process cartridge and electrophotographic apparatus

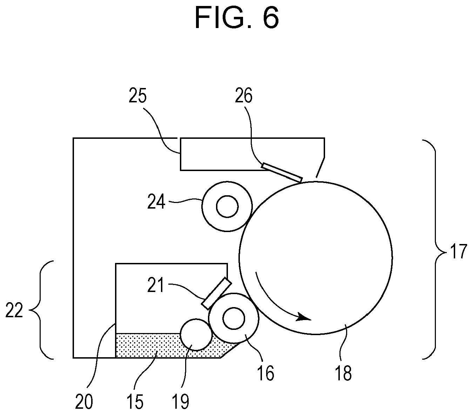

Fig. 6 is a cross-sectional view of a process cartridge including an electro-conductive member according to an embodiment of the present invention, the electro-conductive member serving as a developing roller. In a process cartridge 17 illustrated in Fig. 6, a developing roller 16, a developing blade 21, an electrophotographic photoconductor 18, a cleaning blade 26, a waste toner container 25, and a charging roller 24 are integrated. The process cartridge is detachably attachable to the main body of the electrophotographic apparatus. A developing device 22 includes a toner container 20. The toner container 20 is charged with toner 15. The toner in the toner container 20 is supplied to a surface of the developing roller 16 with a toner supplying roller 19. A toner layer having a predetermined thickness is formed on the surface of the developing roller 16 with the developing blade 21.

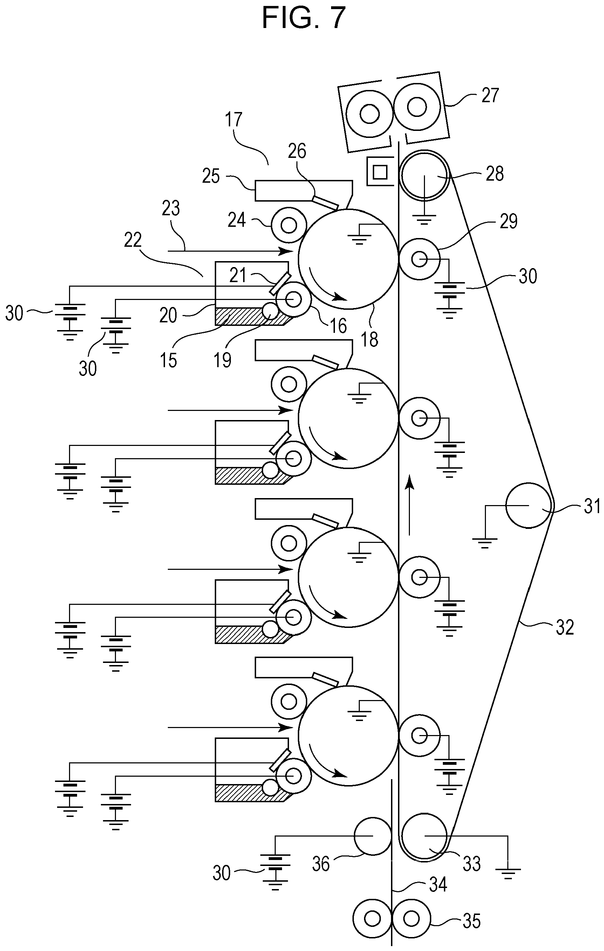

Fig. 7 is a cross-sectional view of an electrophotographic apparatus including electro-conductive members according to an embodiment of the present invention, the electro-conductive members serving as the developing rollers 16. In the electrophotographic apparatus illustrated in Fig. 7, the developing devices 22 each including the developing roller 16, the toner supplying roller 19, the toner container 20, and the developing blade 21 are detachably mounted.

The process cartridges 17 detachably attachable to the main body of the electrophotographic apparatus are mounted. Each of the process cartridge 17 includes the electrophotographic photoconductor 18, the cleaning blade 26, the waste toner container 25, and the charging roller 24. At least one member selected from the group consisting of the electrophotographic photoconductor 18, the cleaning blade 26, the waste toner container 25, and the charging roller 24 may be mounted on the main body of the electrophotographic apparatus rather than the process cartridge 17.

The electrophotographic photoconductor 18 rotates in the direction indicated by an arrow and is uniformly charged with the charging roller 24 configured to subject the electrophotographic photoconductor 18 to charging treatment. An electrostatic latent image is formed on a surface of the electrophotographic photoconductor 18 with laser light 23 emitted from an exposure device configured to write an electrostatic latent image on the electrophotographic photoconductor 18. The electrostatic latent image is developed and visualized as a toner image by supplying the electrostatic latent image with toner using the developing device 22 arranged in contact with the electrophotographic photoconductor 18.

The development performed here is what is called reversal development in which a toner image is formed on an exposed portion. The visualized toner image on the electrophotographic photoconductor 18 is transferred to a sheet 34 serving as a recording medium with a corresponding one of transfer rollers 29 serving as a transfer member. The sheet 34 is fed into the apparatus via feed rollers 35 and an attraction roller 36 and then conveyed into the nip between each of the electrophotographic photoconductors 18 and a corresponding one of the transfer rollers 29 with an endless belt-like transfer conveying belt 32. The transfer conveying belt 32 is operated by a driven roller 33, a driving roller 28, and a tension roller 31. A voltage is applied from a bias power supply 30 to the transfer roller 29 and the attraction roller 36. The sheet 34 to which the toner image has been transferred is subjected to fixing treatment with a fixing device 27 and ejected from the apparatus. Thereby, a printing operation is completed.

The residual toner left on the electrophotographic photoconductors 18 without being transferred to the sheet 34 is scraped with the cleaning blades 26 and collected in the waste toner containers 25.

Each of the developing device 22 includes the toner container 20 containing toner serving as a one-component developer; and the developing roller 16 serving as a developer-carrying member, the developing roller 16 being located at an opening portion in the toner container 20 extending in the longitudinal direction of the toner container 20 and facing a corresponding one of the electrophotographic photoconductors 18. The developing device 22 is configured to develop and visualize the electrostatic latent image on the electrophotographic photoconductor 18.

An embodiment of the present invention provides the electro-conductive member which inhibits the increase in the electrical resistance of the elastic layer included in the electro-conductive member when power is applied and which has excellent endurance.

Another embodiment of the present invention provides the process cartridge and the electrophotographic apparatus which contribute to the formation of a high-quality electrophotographic image.

Still another embodiment of the present invention provides the addition-curable silicone rubber mixture that may be used for the electro-conductive member capable of forming a high-quality electrophotographic image.

### EXAMPLES

While the present invention will be described in more detail below by examples, these examples are not limited to the present invention. First, various evaluations and measurement methods performed in these examples will be described below.

### EXAMPLE 1

### Preparation of mandrel

A mandrel prepared here was produced by applying a primer (trade name: DY35-051, manufactured by Dow Corning Toray Co., Ltd.) to a core bar composed of stainless steel (SUS304) having an outside diameter of 6 mm and a length of 278.9 mm and baking the primer 170°C for 20 minutes.

### Preparation of silicone rubber mixture

### Preparation of inorganic particles

Regarding particles used here, particles having various particle diameters, specific gravities, and sphericities were studied. Table 1 lists the particles used here and their physical properties.

**Table 1**

| Particle No. | Chemical composition | Brand | Particle diameter (µm) | Specific gravity (g·cm⁻³) | Sphericity |
|---|---|---|---|---|---|
| 1 | zeolite | Silton JC-70 | 7 | 1.9 | 0.9 |
| | | (manufactured by Mizusawa Industrial Chemicals, Ltd.) | | | |
| 2 | zeolite | Silton AMT-25 | 2 | 1.8 | 0.8 |
| | | (manufactured by Mizusawa Industrial Chemicals, Ltd.) | | | |
| 3 | silica | HPS-3500 | 3.5 | 2.1 | 0.9 |
| | | (manufactured by Toaqosei Co., Ltd.) | | | |
| 4 | silica | LB-310D | 3 | 2.1 | 0.7 |
| | | (manufactured by Tosoh Corp.) | | | |
| 5 | silica | SFP-20M | 0.2 | 2.1 | 0.9 |
| | | (manufactured by Denki Kagaku Kogyo K.K.) | | | |
| 6 | polymethyl methacrylate | MBX-8 | 5 | 1.2 | 1.0 |
| | | (manufactured by Sekisui Plastics Co., Ltd.) | | | |
| 7 | polymethyl methacrylate | MBX-50 | 50 | 1.2 | 1.0 |
| | | (manufactured by Sekisui Plastics Co., Ltd.) | | | |
| 8 | aluminum | high-pure aluminum | 32 | 2.7 | 0.9 |
| | | (manufactured by Toyo Aluminium K.K.) | | | |
| 9 | alumina | AO-509 | 10 | 3.9 | 1.0 |
| | | (manufactured by Shin-Etsu Quartz Products Co., Ltd.) | | | |
| 10 | alumina | DAW-45 | 43 | 3.9 | 0.9 |
| | | (manufactured by Denki Kagaku Kogyo K.K.) | | | |
| 11 | alumina | DAW-70 | 71 | 3.9 | 0.9 |
| | | (manufactured by Denki Kagaku Kogyo K.K.) | | | |
| 12 | alumina | ASFP-20 | 0.3 | 3.9 | 0.9 |
| | | (manufactured by Denki Kagaku Kogyo K.K.) | | | |
| 13 | alumina | A-42-2 | 5 | 3.9 | 0.5 |
| | | (manufactured by Showa Denko K.K.) | | | |
| 14 | alumina | A11 | 55 | 3.9 | 0.5 |
| | | (manufactured by Nippon Light Metal Co., Ltd.) | | | |
| 15 | alumina | A12 | 60 | 3.9 | 0.6 |
| | | (manufactured by Nippon Light Metal Co., Ltd.) | | | |
| 16 | zirconia | NZ-10 | 11 | 6.0 | 1.0 |
| | | (manufactured by Niimi Sangyo Co., Ltd.) | | | |
| 17 | zirconia | NZ-50 | 48 | 6.0 | 0.9 |
| | | (manufactured by Niimi Sangyo Co., Ltd.) | | | |
| 18 | zirconia | DZB-75 | 75 | 6.0 | 1.0 |
| | | (manufactured by Daiken Chemical Co., Ltd.) | | | |
| 19 | zirconia | DZBφ100 | 100 | 6.0 | 1.0 |
| | | (manufactured by Daiken Chemical Co., Ltd.) | | | |
| 20 | zirconia | DK-3CH | 19 | 6.0 | 0.5 |
| | | (manufactured by Daiichi Kigenso Kagaku Kogyo Co., Ltd.) | | | |
| 21 | hollow glass | Q-CEL 5020FPS | 40 | 0.2 | 1.0 |
| | | (manufactured by Potters-Ballotini Co., Ltd.) | | | |
| 22 | hollow glass | Q-CEL 5020 | 60 | 0.2 | 1.0 |
| | | (manufactured by Potters-Ballotini Co., Ltd.) | | | |
| 23 | silicone resin | Tospearl 145 | 4.5 | 1.3 | 0.97 |
| | | (manufactured by Momentive Performance Materials Japan LLC.) | | | |

### Preparation of silicone composition

Materials listed in Table 2 were mixed together to prepare a silicone rubber mixture 1.

**Table 2**

| | |
|---|---|
| Dimethylpolysiloxane blocked with a vinyl group at each end of its molecular chain | 100.00 parts by mass |
| (vinyl group content: 0.15% by mass) | |
| Dimethylsiloxane blocked with a trimethylsiloxy group at each end of its molecular chain-methylhydrogensiloxane copolymer | 1.50 parts by mass |
| (crosslinking agent, content of H attached to Si atoms: 0.30% by mass) | |
| Complex of platinic chloride with divinyltetramethyldisiloxane (platinum content: 0.5% by mass) | 0.50 parts by mass |
| 1-Ethyl-1-cyclohexanol | 0.04 parts by mass |
| Inorganic particles | 5.08 parts by mass |
| zeolite (Silton JC-70, manufactured by Mizusawa Industrial Chemicals, Ltd.) | |
| Carbon black | 10.15 parts by mass |
| (Denka Black, powder, manufactured by Denki Kagaku Kogyo K.K.) | |

### Formation of elastic layer

The prepared mandrel was concentrically arranged in a cylindrical die having an inside diameter of 12 mm. The silicone rubber mixture 1 was used as a raw material for an elastic layer and injected into the die. After hot forming was performed at 115°C for 5 minutes, the die was cooled to 50°C. The resulting elastic layer integral with the mandrel was taken from the die. In this way, the elastic layer having a diameter of 12 mm was formed on the outer periphery of the mandrel.

### Formation of resin layer

As materials for a resin layer, 100.0 parts by mass of polyester polyol (trade name: Nipporan 3027, manufactured by Nippon Polyurethane Industry Co., Ltd.), 102.6 parts by mass of MDI-based polyisocyanate (trade name: C2521, manufactured by Nippon Polyurethane Industry Co., Ltd.), and 50 parts by mass of carbon black (trade name: MA230, manufactured by Mitsubishi Chemical Corporation) were mixed together under stirring. The mixture was dispersed and stirred in methyl ethyl ketone (MEK) in such a manner that the solid content was 30% by mass. The mixture was uniformly subjected to dispersion treatment. MEK was further added to the mixture to adjust the solid content to 25% by mass. To the mixture, 20 parts by mass of polyurethane resin particles (trade name: Art-Pearl C400, volume-average particle diameter: 14 µm, manufactured by Negami Chemical Industrial Co., Ltd.) was added. The mixture was subjected to dispersion treatment under stirring with a ball mill, thereby preparing a surface layer coating dispersion.

The surface layer coating dispersion was applied to a surface of the elastic layer formed on the outer periphery of the mandrel by dip coating in a film thickness of 13 µm. After drying was performed in an oven at 80°C for 15 minutes, curing was performed in the oven at 140°C for 1 hour to produce the electro-conductive member 4.

The resulting electro-conductive member 4 was evaluated for items described below. Table 2 lists the results.

### Measurement of molecular weight and molecular weight distribution of silicone

The weight-average molecular weight Mw, the number-average molecular weight Mn, and the molecular weight distribution Mw/Mn of silicone were measured by gel permeation chromatography. Specifically, a high-performance liquid chromatograph (HLC-8120GPC, manufactured by Tosoh Corporation) equipped with two GPC columns (TSKgel SuperHM-m, manufactured by Tosoh Corporation) connected in series was used.

Measurement conditions were as follows: temperature: 40°C, flow rate: 0.6 mL/min, detector: refractive index (RI) detector. A 0.1% by mass toluene solution of a sample was used as a measurement sample. A calibration curve was constructed using monodisperse standard polystyrenes (TSK standard polystyrenes: F-128, F-80, F-40, F-20, F-10, F-4, F-2, F-1, A-5000, A-2500, A-1000, and A-500, manufactured by Tosoh Corporation) as reference standards. The molecular weight distribution was obtained from the retention time or the number of counts of the measurement sample. The number-average molecular weight Mn, the weight-average molecular weight Mw, and the dispersity Mw/Mn were determined from the distribution.

### Measurement of carbon black content and inorganic particle content

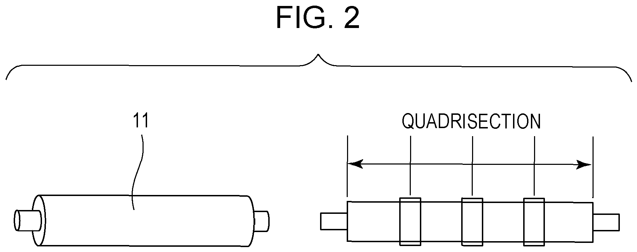

Fig. 2 is a schematic diagram partially illustrating a method for measuring the carbon black content and the inorganic particle content of an electro-conductive member according to an embodiment of the present invention. As illustrated in Fig. 2, nine specimens (10 mg for each specimen) were taken from a total of nine regions, i.e., three regions (near the surface, intermediate between the surface and the mandrel, and near the mandrel) of an electro-conductive rubber layer portion 11 at each of positions at which the conductive rubber layer portion 11 was quadrisected in the longitudinal direction. Measurement was performed with "Thermo Plus2 TG8120" (trade name, manufactured by Rigaku Corporation) in conformity with JIS K6227:1998. The arithmetic mean of measurements of the nine specimens was defined as measurement data. Measurement conditions were as follows: The temperature was kept at 50°C for 5 minutes under a nitrogen gas stream at a flow rate of 200 mL/min and then raised to 800°C at 50 °C/min. Subsequently, the temperature was lowered to 300°C at 50 °C/min and held for 5 minutes for stabilization. Next, the nitrogen gas was switched to air. The temperature was raised to 900°C at 50 °C/min under an air stream at a flow rate of 200 mL/min. Weight loss during the second temperature rise (in air) provided information about the weight of carbon black in the rubber component. The ratio of the weight of carbon black to the total weight of components constituting the specimen provided the carbon black content (% by mass). The weight of a residual substance, which had not been burned, after the measurement provided the inorganic particle content (% by mass). Measurement of number-average particle diameter of particles

The residual substance (ash) obtained at the time of the measurement of the carbon black content and the inorganic particle content was the inorganic particles. The resulting inorganic particles were observed with a scanning electron microscope. From the resulting two-dimensional image, 100 particles which did not overlap with each other were randomly selected. A tangential diameter in a fixed direction (Feret diameter) defined by a distance between two parallel tangents on opposite sides of the two-dimensional image of each particle was measured and defined as the particle diameter of each particle. The arithmetic mean of measurements of the 100 particles was defined as the number-average particle diameter according to an embodiment of the present invention.

### Measurement of sphericity of particles

The residual substance (ash) obtained at the time of the measurement of the carbon black content and the inorganic particle content was the inorganic particles. The resulting inorganic particles were observed with the scanning electron microscope. The magnification during observation may be appropriately selected in response to the particle diameter of the particles. Table 3 lists the relationship between the particle diameter of the particles and the appropriate magnification during observation.

**Table 3**

| Particle diameter of particles | Magnification of scanning electron microscope |
|---|---|
| less than 1 µm | 10000× |
| 1 µm or more and less than 10 µm | 1000× |
| 10 µm or more and less than 50 µm | 500× |
| 50 µm or more and less than 100 µm | 100× |
| 100 µm or more | less than 100× |

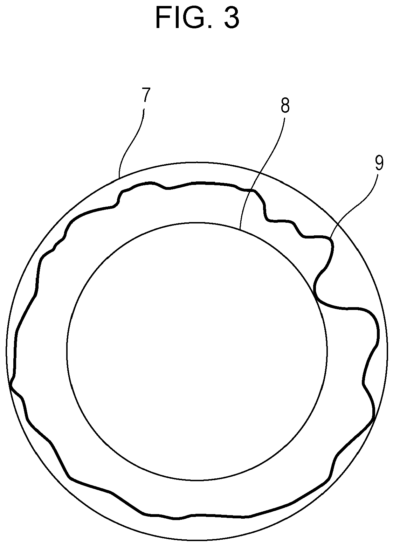

From the resulting two-dimensional image, 100 particles which did not overlap with each other were randomly selected. Regarding the selected respective particles, a circumscribed circle diameter 7 and the inscribed circle diameter 8 with respect to an outline 9 of each of the particles were determined as illustrated in Fig. 3. The ratio of the inscribed circle diameter to the circumscribed circle diameter, i.e., inscribed circle diameter/the circumscribed circle diameter, was defined as the sphericity of each particle. The arithmetic mean of measurements of the 100 particles was defined as the sphericity according to an embodiment of the present invention.

### Resistance value of electro-conductive member

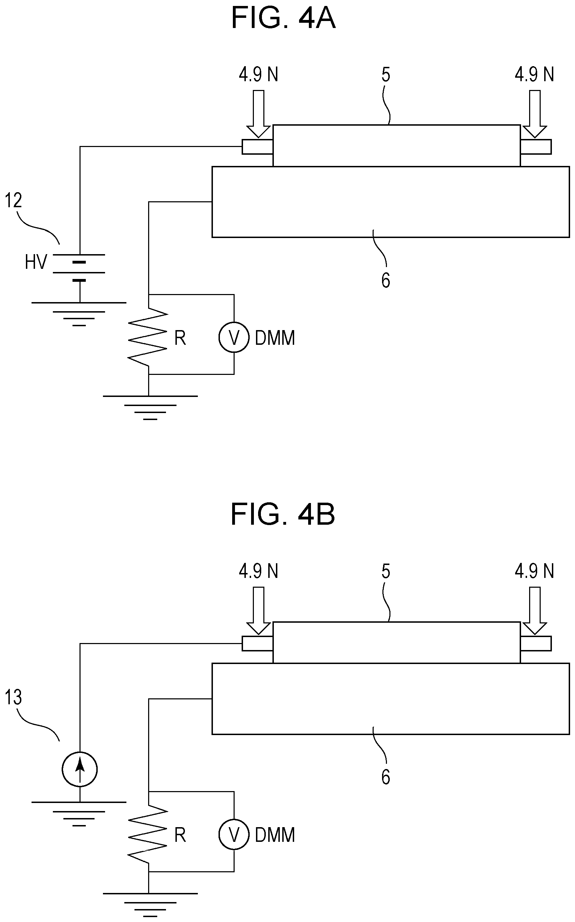

The electro-conductive member was allowed to stand in an environment with a temperature of 15°C and a relative humidity of 10% for 24 hours before measurement, and then the following measurement was performed. A device for measuring resistance illustrated in Fig. 4A was used. An electro-conductive member 5 on which a resin layer did not formed was arranged in contact with a metal drum 6 having a diameter of 30 mm in the foregoing environment while a load of 4.9 N was applied to both ends of the mandrel of the electro-conductive member 5. The metal drum 6 was rotated at 25 rpm to rotate the electro-conductive member 5. A resistor R having a given electrical resistance two or more orders of magnitude less than the electrical resistance of the electro-conductive member 5 was connected between the metal drum 6 and the ground. A voltage of -50 V (constant voltage) was applied from a constant-voltage power supply 12 to the mandrel of the electro-conductive member 5. The potential difference across the resistor R was measured with a digital multimeter DMM (for example, 189 TRUE RMS MULTIMETER, manufactured by Fluke Corporation). Here, the value of the resistor R such that the measurement value of the potential difference was 1/100 or less of the applied voltage was used. A current flowing to the metal drum 6 through the electro-conductive member 5 was calculated from the measurement of the potential difference and the electrical resistance of the resistor R. The resistance value of the electro-conductive member 5 was determined from the current and an applied voltage of 50 V. Regarding the measurement with the digital multimeter, sampling was performed for 3 seconds from 2 seconds after the application of the voltage. In this case, the sampling rate was 100 Hz. The resistance value of the electro-conductive member was calculated from the mean value of the current values measured during a sampling time of 3 seconds and the applied voltage. The ratio of the maximum to the minimum of the current values measured during a sampling time of 3 seconds, i.e., maximum current value/minimum current value, was defined as resistance nonuniformity.

In the case where the electro-conductive member has a blade shape, the measurement was performed in the same way as above, except that the metal drum was not rotated.

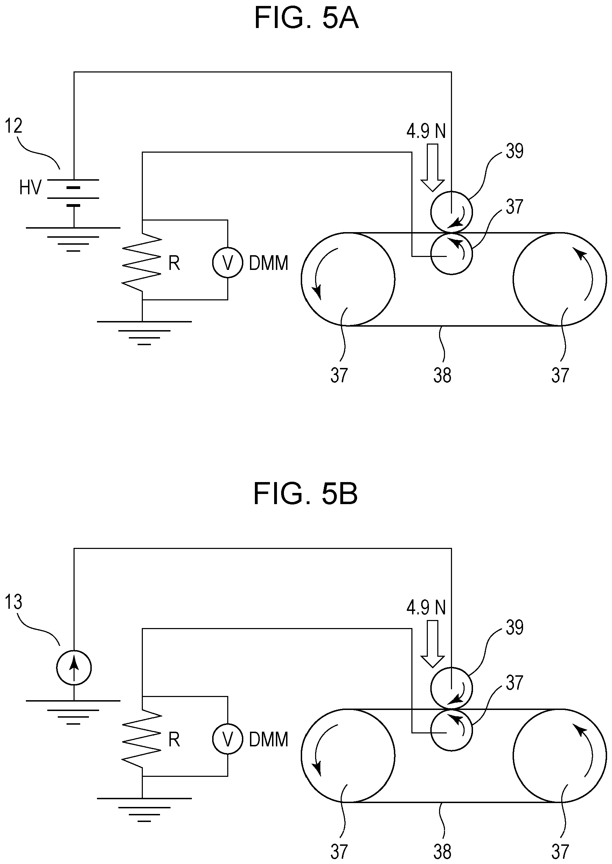

In the case where the electro-conductive member has a belt shape, the measurement was performed in the same way as above, except that the metal drums 37 were rotated with a device for measuring resistance illustrated in Fig. 5A in such a manner that the surface speed of the belt 38 was 100 mm/s. In this case, the measurement was performed while a load of 4.9 N was applied to both ends of the mandrel of the metal drum 39.

### Measurement of increase in electrical resistance due to power application

The electro-conductive member was allowed to stand in an environment with a temperature of 15°C and a relative humidity of 10% for 24 hours before measurement, and then the following measurement was performed. The measurement was performed in the foregoing environment with a device for measuring resistance illustrated in Fig. 4B. The metal drum 6 having a diameter of 30 mm was rotated at a surface speed of 25 rpm while a load of 4.9 N was applied to both ends of the mandrel of the target electro-conductive member 5 to allow the electro-conductive member 5 to be brought into pressure contact with the metal drum. After a current of 100 µA (constant current) was passed therethrough for 10 hours with a constant-current power supply 13, the voltage value was measured. The potential difference across a resistor R having a given electrical resistance connected between the metal drum 6 and the ground was measured with a digital multimeter DMM (for example, 189 TRUE RMS MULTIMETER, manufactured by Fluke Corporation). Here, the value of the resistor R such that the measurement value of the potential difference was 1/100 or less of the applied voltage was used. A change in voltage from the initial voltage (voltage after power application/initial voltage) was defined as an index of the increase in electrical resistance due to power application.

In the case where the electro-conductive member has a blade shape, the measurement was performed in the same way as above, except that the metal drum was not rotated.

In the case where the electro-conductive member has a belt shape, the measurement was performed in the same way as above, except that the metal drums 37 were rotated with a device for measuring resistance illustrated in Fig. 5B in such a manner that the surface speed of the belt 38 was 100 mm/s. In this case, the measurement was performed while a load of 4.9 N was applied to both ends of the mandrel of the metal drum 39.

### Evaluation of ghosting

An electro-conductive member that had been subjected to the foregoing test of the increase in electrical resistance due to power application and an electro-conductive member that had not been subjected to the test of the increase in electrical resistance due to power application were allowed to stand in an environment with a temperature of 15°C and a relative humidity of 10% for 24 hours before measurement, and then the following evaluation was performed.

A laser printer (trade name: LBP7700C, manufactured by CANON KABUSHIKI KAISHA) having a structure as illustrated in Fig. 7 was placed in an environment with a temperature of 15°C and a relative humidity of 10%. The electro-conductive member according to this example was mounted as the developing roller 16. The evaluation of a ghost image was performed.

Specifically, an image pattern including a solid black image of a 15 mm × 15 mm square located in a leading-edge portion and a halftone image located throughout the following portion was formed by printing on a sheet with a black toner. Here, uneven density appeared in the halftone portion in the form of the 15 mm × 15 mm square at a period of the developing roller was visually evaluated. The evaluation of ghosting was performed according to evaluation criteria described below.
- A:: No ghosting occurs.
- B:: Ghosting occurs very slightly.
- C:: Ghosting occurs slightly.
- D:: Ghosting occurs clearly.

### EXAMPLES 2 to 37

Silicone rubber mixtures were prepared as in EXAMPLE 1, except that the amount of carbon black used and the type and amount of inorganic particles used were changed as listed in Table 4. Electro-conductive members were produced as in EXAMPLE 1 with the resulting silicone rubber mixtures and evaluated. Table 4 also lists the results.

**Table 4**

| EXAMPLE | Carbon black | Inorganic particles | | Electro-conductive roller | | |
|---|---|---|---|---|---|---|
| | Content (% by mass) | Particle No. | Content (% by mass) | Resistance nonuniformity | Degradation due to power application | Evaluation of ghosting |
| 1 | 10.0 | 1 | 5.0 | 2.7 | 1.4 | A |
| 2 | 2.0 | 1 | 20.0 | 3.3 | 3.1 | A |
| 3 | 60.0 | 1 | 20.0 | 2.8 | 3.2 | B |
| 4 | 60.0 | 1 | 12.0 | 3.4 | 1.4 | A |
| 5 | 30.0 | 1 | 6.0 | 3.6 | 1.4 | A |
| 6 | 30.0 | 3 | 10.0 | 3.2 | 1.5 | A |
| 7 | 10.0 | 3 | 10.0 | 3.1 | 1.5 | A |
| 8 | 30.0 | 3 | 20.0 | 2.8 | 2.8 | A |
| 9 | 30.0 | 8 | 10.0 | 3.3 | 1.7 | A |
| 10 | 10.0 | 8 | 5.0 | 3.4 | 1.7 | A |
| 11 | 10.0 | 8 | 15.0 | 3.5 | 2.0 | A |
| 12 | 10.0 | 9 | 5.0 | 3.1 | 1.6 | A |
| 13 | 10.0 | 9 | 5.0 | 3.2 | 1.6 | A |
| 14 | 50.0 | 9 | 20.0 | 2.8 | 3.1 | B |
| 15 | 30.0 | 9 | 10.0 | 3.1 | 1.6 | A |
| 16 | 2.0 | 10 | 0.4 | 3.1 | 1.7 | A |
| 17 | 6.0 | 10 | 20.0 | 3.1 | 2.8 | A |
| 18 | 25.0 | 11 | 5.0 | 3.0 | 1.6 | A |
| 19 | 10.0 | 11 | 20.0 | 2.6 | 3.0 | B |
| 20 | 2.0 | 16 | 5.0 | 2.8 | 1.5 | A |
| 21 | 4.0 | 16 | 15.0 | 3.1 | 1.5 | A |
| 22 | 25.0 | 16 | 10.0 | 3.1 | 1.5 | A |
| 23 | 50.0 | 16 | 15.0 | 2.9 | 1.6 | A |
| 24 | 10.0 | 17 | 2.0 | 3.1 | 1.7 | A |
| 25 | 6.0 | 17 | 18.0 | 2.8 | 1.9 | A |
| 26 | 5.0 | 18 | 10.0 | 3.3 | 1.5 | A |
| 27 | 2.0 | 18 | 13.0 | 3.4 | 1.8 | A |
| 28 | 40.0 | 9 | 5.0 | 3.5 | 1.9 | A |
| 29 | 50.0 | 9 | 5.0 | 3.1 | 1.9 | A |
| 30 | 50.0 | 9 | 10.0 | 3.0 | 1.8 | A |
| 31 | 30.0 | 9 | 0.4 | 2.6 | 1.8 | A |
| 32 | 60.0 | 9 | 0.4 | 2.9 | 1.9 | A |
| 33 | 15.0 | 2 | 5.0 | 3.1 | 1.9 | A |
| 34 | 10.0 | 19 | 6.0 | 2.8 | 1.7 | A |
| 35 | 30.0 | 19 | 10.0 | 3.0 | 1.8 | A |
| 36 | 2.0 | 1 | 18.0 | 2.9 | 2.0 | A |
| 37 | 60.0 | 1 | 18.0 | 2.8 | 1.9 | A |

### COMPARATIVE EXAMPLE 1

A silicone rubber mixture was prepared as in EXAMPLE 1, except that the inorganic particles were not used and that the carbon black (Denka Black, manufactured by Denki Kagaku Kogyo K.K.) was used in an amount of 10% by mass. A comparative electro-conductive member 1 was produced as in EXAMPLE 1. The same evaluation was performed as in EXAMPLE 1.

### COMPARATIVE EXAMPLES 2 to 17

Silicone rubber mixtures were prepared as in EXAMPLE 1, except that the amount of carbon black used and the type and amount of particles used were changed as listed in Table 5. Electro-conductive members were produced as in EXAMPLE 1 with the resulting silicone rubber mixtures and evaluated. Table 5 also lists the results.

**Table 5**

| COMPARATIVE EXAMPLE | Carbon black | Particles | | Electro-conductive roller | | |
|---|---|---|---|---|---|---|
| | Content (% bv mass) | Particle No. | Content (% by mass) | Resistance nonuniformity | Degradation due to power application | Evaluation of ghosting |
| 1 | 10.0 | - | - | 4.1 | 6.1 | C |
| 2 | 10.0 | 6 | 5.0 | 4.0 | 6.2 | C |
| 3 | 10.0 | 6 | 2.0 | 3.9 | 6.1 | C |
| 4 | 2.0 | 4 | 5.0 | 3.8 | 6.0 | C |
| 5 | 30.0 | 13 | 10.0 | 4.5 | 5.7 | C |
| 6 | 30.0 | 14 | 10.0 | 4.3 | 5.7 | D |
| 7 | 30.0 | 15 | 10.0 | 4.5 | 5.9 | D |
| 8 | 2.0 | 20 | 5.0 | 4.2 | 5.8 | D |
| 9 | 2.0 | 21 | 0.4 | 4.7 | 5.9 | D |
| 10 | 2.0 | 22 | 20.0 | 4.2 | 6.0 | D |
| 11 | 60.0 | 23 | 20.0 | 4.6 | 6.1 | C |
| 12 | 10.0 | 12 | 10.0 | 4.3 | 5.8 | C |
| 13 | 10.0 | 12 | 5.0 | 4.6 | 5.9 | C |
| 14 | 1.0 | 9 | 5.0 | 4.5 | 6.0 | C |
| 15 | 10.0 | 9 | 21.0 | 4.2 | 6.0 | C |
| 16 | 50.0 | 10 | 21.0 | 4.3 | 5.9 | C |
| 17 | 62.0 | 10 | 12.0 | 4.1 | 5.9 | C |

In EXAMPLES 1 to 37, the electro-conductive members were produced in which the increase in electrical resistance due to power application was inhibited. The reason for this is presumably that the number-average particle diameter, the sphericity, and the specific gravity were in the ranges appropriate for the inhibition of the increase in electrical resistance due to power application, so that the electro-conductive members which had only a low degree of resistance nonuniformity and in which the increase in electrical resistance due to power application was inhibited were produced.

In contrast, in COMPARATIVE EXAMPLE 1, no particles were added, so that the resistance nonuniformity and the increase in electrical resistance due to power application were evaluated as poor. In COMPARATIVE EXAMPLES 2 to 17, the electro-conductive members the particles contained the particles. Although the resistance nonuniformity was improved, the effect of inhibiting the increase in electrical resistance due to power application was not provided because of, for example, an insufficient or excess amount added, a sphericity less than 0.8, or a specific gravity less than 1.5.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

There is an electro-conductive member (4) for electrophotography. The electro-conductive member for electrophotography includes, in sequence, an electro-conductive base (1), an electro-conductive elastic layer (2), and a resin layer (3). The elastic layer (3) contains a cured product of an addition-curable silicone rubber mixture having a specific composition. The addition-curable silicone rubber mixture contains an organopolysiloxane that contains an alkenyl group attached to a silicon atom in its molecule, an organopolysiloxane that contains a hydrogen atom attached to a silicon atom in its molecule, carbon black, and spherical solid inorganic particles.

## Claims

1. An electro-conductive member (4) for electrophotography, comprising, in sequence:
an electro-conductive base (1);
an electro-conductive elastic layer (2); and
a resin layer (3),
wherein the elastic layer contains a cured product of an addition-curable silicone rubber mixture containing components (a) to (d),
the component (a): an organopolysiloxane that contains an alkenyl group attached to a silicon atom in its molecule,
the component (b): an organopolysiloxane that contains a hydrogen atom attached to a silicon atom in its molecule,
the component (c): carbon black, and
the component (d): spherical solid inorganic particles,
wherein in the addition-curable silicone rubber mixture,
the content of the component (c) is 2.0% by mass or more and 60.0% by mass or less with respect to the total mass of the component (a) and the component (b),
the content of the component (d) is 0.4% by mass or more and 20.0% by mass or less with respect to the total mass of the component (a) and the component (b), and
the component (d) has
a number-average particle diameter of 1 µm or more and 100 µm or less,
a specific gravity of 1.5 or more, and
a sphericity of 0.8 or more.

2. The electro-conductive member (4) according to claim 1, wherein the component (d) is inorganic particles composed of at least one selected from the group consisting of zeolite, alumina, zirconia, and silica.

3. An addition-curable silicone rubber mixture comprising:
component (a): an organopolysiloxane that contains an alkenyl group attached to a silicon atom in its molecule;
component (b): an organopolysiloxane that contains a hydrogen atom attached to a silicon atom in its molecule;
component (c): carbon black; and
component (d): spherical solid inorganic particles,
wherein in the addition-curable silicone rubber mixture,
the content of the component (c) is 2.0% by mass or more and 60.0% by mass or less with respect to the total mass of the component (a) and the component (b),
the content of the component (d) is 0.4% by mass or more and 20.0% by mass or less with respect to the total mass of the component (a) and the component (b), and
the component (d) has
a number-average particle diameter of 1 µm or more and 100 µm or less,
a specific gravity of 1.5 or more, and
a sphericity of 0.8 or more.

4. A process cartridge (17) detachably attachable to the main body of an electrophotographic apparatus, comprising:
the electro-conductive member (4) according to claim 1 or 2.

5. The process cartridge (17) according to claim 4, further comprising:
a photoconductor drum; and
a developing roller (16),
wherein the electro-conductive member (4) is used as the developing roller (16).

6. An electrophotographic apparatus comprising:
the electro-conductive member (4) according to claim 1 or 2.

7. The electrophotographic apparatus according to claim 6, further comprising:
an electrophotographic photoconductor (18);
charging means (24) arranged to charge the electrophotographic photoconductor (18);
exposure means arranged to form an electrostatic latent image on the electrophotographic photoconductor (18); and
developing means (16) arranged to carry a developer on a surface of the developing means (16) and develop the electrostatic latent image on the electrophotographic photoconductor (18),
wherein the electro-conductive member (4) is used as the developing means (16).

## Patentansprüche

1. Elektroleitfähiges Element (4) für Elektrophotographie, das in Abfolge umfasst:
eine elektroleitfähige Basis (1);
eine elektroleitfähige elastische Schicht (2); und
eine Harzschicht (3),
wobei die elastische Schicht ein gehärtetes Produkt einer Additions-härtbaren Silikongummimischung enthält, die die Komponenten (a) bis (d) enthält,
die Komponente (a): ein Organopolysiloxan, das eine Alkylengruppe angefügt an ein Siliciumatom in dessen Molekül enthält,
die Komponente (b): ein Organopolysiloxan, das ein Wasserstoffatom angefügt an ein Siliciumatom in dessen Molekül enthält,
die Komponente (c): Carbon Black, und
die Komponente (d): sphärische feste anorganische Teilchen,
wobei in der Additions-härtbaren Silikongummimischung
der Gehalt der Komponente (c) 2,0 Massen-% oder mehr und 60,0 Massen-% oder weniger bezüglich der Gesamtmasse der Komponente (a) und der Komponente (b) ist,
der Gehalt der Komponente (d) 0,4 Massen-% oder mehr und 20,0 Massen-% oder weniger bezüglich der Gesamtmasse der Komponente (a) und der Komponente (b) ist, und
die Komponente (d) aufweist
einen zahlengemittelten Teilchendurchmesser von 1 µm oder mehr und 100 µm oder weniger,
ein spezifisches Gewicht von 1,5 oder mehr, und
eine Sphärizität von 0,8 oder mehr.

2. Elektroleitfähiges Element (4) nach Anspruch 1, wobei die Komponente (d) anorganische Teilchen ist, die aus zumindest einem ausgewählt aus der Gruppe bestehend aus Zeolith, Aluminiumoxid, Zirkonoxid und Siliciumdioxid zusammengesetzt sind.

3. Additions-härtbare Silikomgummimischung, die umfasst:
Komponente (a): ein Organopolysiloxan, das eine Alkylengruppe angefügt an ein Siliciumatom in dessen Molekül enthält,
Komponente (b): ein Organopolysiloxan, das ein Wasserstoffatom angefügt an ein Siliciumatom in dessen Molekül enthält,
Komponente (c): Carbon Black, und
Komponente (d): sphärische feste anorganische Teilchen,
wobei in der Additions-härtbaren Silikongummimischung
der Gehalt der Komponente (c) 2,0 Massen-% oder mehr und 60,0 Massen-% oder weniger bezüglich der Gesamtmasse der Komponente (a) und der Komponente (b) ist,
der Gehalt der Komponente (d) 0,4 Massen-% oder mehr und 20,0 Massen-% oder weniger bezüglich der Gesamtmasse der Komponente (a) und der Komponente (b) ist, und
die Komponente (d) aufweist
einen zahlengemittelten Teilchendurchmesser von 1 µm oder mehr und 100 µm oder weniger,
ein spezifisches Gewicht von 1,5 oder mehr, und
eine Sphärizität von 0,8 oder mehr.

4. Prozesskartusche (17), die abnehmbar an den Hauptkörper eines elektrophotographischen Apparats anfügbar ist, die umfasst:
das elektroleitfähige Element (4) nach Anspruch 1 oder 2.

5. Prozesskartusche (17) nach Anspruch 4, die ferner umfasst:
eine photoleitfähige Walze; und
einen Entwicklungsroller (16),
wobei das elektroleitfähige Element (4) als der Entwicklungsroller (16) verwendet wird.

6. Elektrophotographischer Apparat, der umfasst:
das elektroleitfähige Element (4) nach Anspruch 1 oder 2.

7. Elektrophotographischer Apparat nach Anspruch 6, der ferner umfasst:
einen elektrophotographischen Photoleiter (18);
Ladungsmittel (24), angeordnet, um den elektrophotographischen Photoleiter (18) zu laden;
Belichtungsmittel, angeordnet zum Bilden eines elektrostatischen latenten Bildes auf dem elektrophotographischen Photoleiter (18); und
Entwicklungsmittel (16), angeordnet, um einen Entwickler auf einer Oberfläche des Entwicklungsmittels (16) zu tragen und das elektrostatische latente Bild auf dem elektrophotographischen Photoleiter (18) zu entwickeln,
wobei das elektroleitfähige Element (4) als das Entwicklungsmittel (16) verwendet wird.

## Revendications

1. Elément électroconducteur (4) pour l'électrophotographie, comprenant, dans l'ordre :
une base électroconductrice (1) ;
une couche élastique électroconductrice (2) ; et
une couche de résine (3),
dans lequel la couche élastique contient un produit durci d'un mélange de caoutchouc siliconé durcissable par addition, contenant les composants (a) à (d),
le composant (a) : un organopolysiloxane qui contient un groupe alcényle fixé à un atome de silicium dans sa molécule,
le composant (b) : un organopolysiloxane qui contient un atome d'hydrogène fixé à un atome de silicium dans sa molécule,
le composant (c) : du noir de carbone, et
le composant (d) : des particules inorganiques solides sphériques,
dans lequel, dans le mélange de caoutchouc siliconé durcissable par addition,
la teneur en composant (c) est comprise entre 2,0 % en poids ou plus et 60,0 % en poids ou moins par rapport au poids total du composant (a) et du composant (b),
la teneur en composant (d) est comprise entre 0,4 % en poids ou plus et 20,0 % en poids ou moins par rapport au poids total du composant (a) et du composant (b), et
le composant (d) possède :
un diamètre de particules moyen en nombre compris entre 1 pm ou plus et 100 µm ou moins,
une gravité spécifique de 1,5 ou plus, et
une sphéricité de 0,8 ou plus.

2. Elément électroconducteur (4) selon la revendication 1, dans lequel le composant (d) consiste en des particules inorganiques composées d'au moins un élément choisi dans le groupe constitué par la zéolithe, l'alumine, la zircone, et la silice.

3. Mélange de caoutchouc siliconé durcissable par addition, comprenant :
composant (a) : un organopolysiloxane qui contient un groupe alcényle fixé à un atome de silicium dans sa molécule,
composant (b) : un organopolysiloxane qui contient un atome d'hydrogène fixé à un atome de silicium dans sa molécule,
composant (c) : du noir de carbone, et
composant (d) : des particules inorganiques solides sphériques,
dans lequel, dans le mélange de caoutchouc siliconé durcissable par addition,
la teneur en composant (c) est comprise entre 2,0 % en poids ou plus et 60,0 % en poids ou moins par rapport au poids total du composant (a) et du composant (b),
la teneur en composant (d) est comprise entre 0,4 % en poids ou plus et 20,0 % en poids ou moins par rapport au poids total du composant (a) et du composant (b), et
le composant (d) possède :
un diamètre de particules moyen en nombre compris entre 1 pm ou plus et 100 µm ou moins,
une gravité spécifique de 1,5 ou plus, et
une sphéricité de 0,8 ou plus.

4. Cartouche de traitement (17), pouvant être fixée de manière amovible au corps principal d'un appareil électrophotographique, comprenant :
l'élément électroconducteur (4) selon la revendication 1 ou 2.

5. Cartouche de traitement (17) selon la revendication 4, comprenant en outre :
un tambour photoconducteur ; et
un rouleau de développement (16),
dans laquelle l'élément électroconducteur (4) est utilisé comme rouleau de développement (16).

6. Appareil électrophotographique comprenant :
l'élément électroconducteur (4) selon la revendication 1 ou 2.

7. Appareil électrophotographique selon la revendication 6, comprenant en outre :
un photoconducteur électrophotographique (18) ;
des moyens de charge (24) disposés afin de charger le photoconducteur électrophotographique (18) ;
des moyens d'exposition disposés afin de former une image latente électrostatique sur le photoconducteur électrophotographique (18) ; et
des moyens de développement (16) disposés afin de porter un développateur sur une surface du moyen de développement (16) et de développer l'image latente électrostatique sur le photoconducteur électrophotographique (18),
dans lequel l'élément électroconducteur (4) est utilisé comme moyen de développement (16).
